# FASCICULE DE BREVET EUROPEEN

(11) **EP 3 881 383 B1**
(45) Date de publication et mention de la délivrance du brevet: **28.12.2022**
(21) Numéro de dépôt: 19829262.5
(22) Date de dépôt: 04.11.2019
(51) Int. Cl.: H01M 8/248, H01M 8/1018, H01M 8/04007, H01M 8/04014, C25B 1/04, C25B 9/00, C25B 9/73, C25B 15/02, H01M 8/10

(54) **DISPOSITIF ELECTROCHIMIQUE A OXYDES SOLIDES POURVU D'UN MOYEN DE SURCHAUFFE INTEGRE COMPACT**
ELEKTROCHEMISCHE FESTOXIDVORRICHTUNG MIT KOMPAKTEN INTEGRIERTEN ÜBERHITZUNGSMITTELN
SOLID OXIDE ELECTROCHEMICAL DEVICE PROVIDED WITH COMPACT INTEGRATED OVERHEATING MEANS

(30) Priorité: 16.11.2018 FR 1860641
(43) Date de publication de la demande: 22.09.2021
(73) Titulaire: Commissariat à l'énergie atomique et aux énergies alternatives, 75015 Paris (FR)
(72) Inventeur: PLANQUE, Michel, 38054 GRENOBLE CEDEX 09 (FR); BERNARD, Charlotte, 38054 GRENOBLE CEDEX 09 (FR); ROUX, Guilhem, 38054 GRENOBLE CEDEX 09 (FR)
(74) Mandataire: Brevalex
(86) Numéro de dépôt international: PCT/FR2019/052593
(87) Numéro de publication internationale: WO 2020/099757

(56) Documents cités:
- DE-U1-202014 007 977
- FR-A1- 3 045 215
- FR-A1- 3 061 496
- US-A1- 2013 244 126
- US-B1- 6 649 293

## Description

### DOMAINE TECHNIQUE

La présente invention se rapporte au domaine général des dispositifs électrochimiques pourvus de cellules électrochimiques à oxydes solides fonctionnant à haute température.

La présente invention concerne notamment un dispositif électrochimique comprenant une pluralité de cellules électrochimiques enserrées entre deux plaques de serrage, et dont au moins l'une des deux plaques est pourvue d'un moyen de surchauffe intégré.

Le dispositif selon la présente invention peut en particulier être mis en œuvre pour l'électrolyse à haute température ou en tant que pile à combustible.

### ÉTAT DE LA TECHNIQUE ANTÉRIEURE

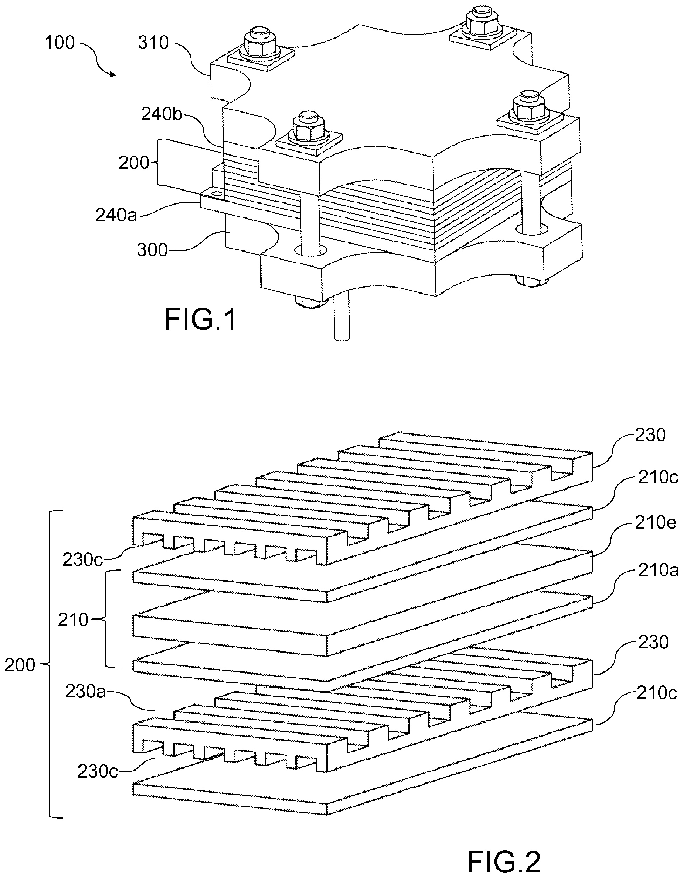

La figure 1 représente un dispositif électrochimique connu de l'état de la technique et décrit dans le document [1] cité à la fin de la description.

Le dispositif électrochimique comprend un empilement à oxydes solides fonctionnant à haute température enserré en deux plaques de serrage pouvant fonctionner soit en mode électrolyseur, soit en mode pile à combustible.

Le dispositif électrochimique 100 est généralement désigné sous l'un ou l'autre des acronymes anglo-saxon « SOEC » (« Solid Oxide Electrolyser Cell ») ou « SOFC » (« Solid Oxide Full Cell ») lorsqu'il fonctionne, respectivement, en mode électrolyseur ou en mode pile à combustible.

L'empilement à oxydes solides fonctionnant à haute température, tel qu'illustré à la figure 2, comprend un empilement 200 de cellules électrochimiques élémentaires 210 entre lesquelles viennent s'interposer des interconnecteurs 230 destinés à assurer un contact électrique entre les cellules électrochimiques élémentaires et également leur distribution en gaz réactifs.

Chaque cellule électrochimique élémentaire comprend un électrolyte 210e intercalé entre une anode 210a et une cathode 210c.

Tout au long de la description de la présente demande, par « anode », « cathode » et « électrolyte », on entend des éléments de forme généralement plane, par exemple sous forme de couche, qui comprennent deux faces principales essentiellement parallèles et reliées par un contour.

L'anode et la cathode de chaque cellule électrochimique élémentaire comprennent généralement une couche poreuse, tandis que l'électrolyte forme une couche dense et étanche.

Chaque interconnecteur disposé de part et d'autre d'une cellule électrochimique forme, respectivement, avec l'anode un compartiment anodique 230a de distribution et de collecte de gaz, et avec la cathode un compartiment cathodique 230c de distribution et de collecte de gaz.

En fonctionnement, l'anode et la cathode sont le siège de réactions électrochimiques, tandis que l'électrolyte permet le transport d'ions de la cathode vers l'anode, ou inversement selon que le dispositif électrochimique fonctionne en mode électrolyseur ou en mode pile à combustible.

Ainsi en mode électrolyseur, le compartiment cathodique permet un apport de vapeur d'eau et une évacuation des produits de réduction de l'eau, notamment de l'hydrogène, tandis que le compartiment anodique assure, via un gaz drainant, l'évacuation du dioxygène produit de l'oxydation des ions O²⁻ migrant de la cathode vers l'anode.

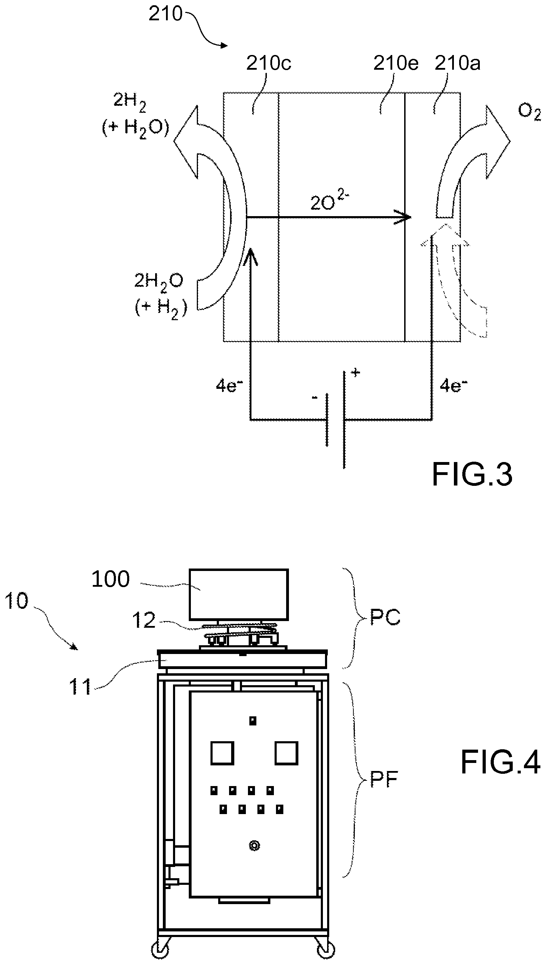

Le mécanisme d'électrolyse (mode « SOEC ») de la vapeur d'eau par une cellule électrochimique élémentaire est illustré à la figure 3. Au cours de cette électrolyse, la cellule électrochimique élémentaire est alimentée par un courant circulant de la cathode vers l'anode. La vapeur d'eau distribuée par le compartiment cathodique est alors réduite sous l'effet du courant selon la demi réaction suivante :

2 H₂O + 4 e⁻ → 2 H₂ + 2 O²⁻.

Le dihydrogène produit lors de cette réaction est alors évacué, tandis que les ions O²⁻ produits lors de cette réduction migrent de la cathode vers l'anode, via l'électrolyte, où ils sont oxydés en dioxygène selon la demi-réaction :

2 O²⁻ → O₂ + 4 e⁻.

Le dioxygène ainsi formé est quant à lui évacué par le gaz drainant circulant dans le compartiment anodique.

L'électrolyse de la vapeur d'eau répond à la réaction suivante :

2 H₂O → 2 H₂ + O₂.

En mode pile à combustible (« SOFC »), de l'air est injecté dans le compartiment cathodique où l'oxygène se réduit alors en ions O²⁻. Ces ions O²⁻ migrent alors vers l'anode et réagissent avec du dihydrogène circulant dans le compartiment anodique pour former de l'eau.

Le fonctionnement en mode pile à combustible permet la production d'un courant électrique.

L'optimisation du fonctionnement d'un tel dispositif électrochimique connu de l'état de la technique peut toutefois requérir certaines contraintes.

Notamment, il est nécessaire d'avoir une isolation électrique entre deux interconnecteurs successifs sous peine de court-circuiter la cellule électrochimique élémentaire, mais aussi un bon contact électrique et une surface de contact suffisante entre une cellule électrochimique élémentaire et un interconnecteur. La plus faible résistance ohmique possible est alors recherchée entre cellules et interconnecteurs. Celle-ci dépend des matériaux en regard mais également du niveau de serrage de l'empilement.

Par ailleurs, il faut disposer d'une étanchéité entre les compartiments anodiques et cathodiques sous peine d'avoir une recombinaison des gaz produits entraînant une baisse de rendement et surtout l'apparition de points chauds endommageant l'empilement. De nouveau, cette étanchéité dépend de la conception des joints et des matériaux utilisés mais également du niveau de serrage de l'empilement.

Enfin, il est préférable d'avoir une bonne distribution des gaz à la fois en entrée et en récupération des produits sous peine de perte de rendement, d'inhomogénéité de pression et de température au sein des différentes cellules électrochimiques élémentaires, voire de dégradations rédhibitoires desdites cellules.

Il est par ailleurs notable qu'une injection des gaz à haute température, notamment entre 600°C et 1000°C, tant en mode électrolyse qu'en mode pile à combustible, présente un avantage certain.

Les gaz entrants et sortants dans l'empilement à oxydes solides à haute température SOEC ou SOFC peuvent être chauffés préalablement à leur injection dans ledit empilement, notamment avec un four tel que représenté à la figure 4.

À cet égard, le four 10 comporte des parties froides PF et des parties chaudes PC, ces dernières comprenant la sole de four 11, un tube en boucle 12 pour gérer les entrées et sorties de gaz du dispositif électrochimique.

Il existe alors deux techniques principales pour réaliser la surchauffe des gaz d'entrée dans un empilement d'électrolyse à haute température (SOEC) ou de pile à combustible (SOFC).

Tel que représenté schématiquement à la figure 4, il est possible de disposer un tube en boucle 12 enroulé au droit des résistances chauffantes du four 10 dans sa partie chaude PC.

Les gaz sont alors préalablement chauffés à une température voisine d'environ 500°C en sortie d'échangeurs, et circulent alors dans le tube en boucle 12 afin d'être exposés au rayonnement des résistances chauffantes. Il résulte de cette exposition au rayonnement, une surchauffe des gaz d'une température d'environ 300°C avant que ces derniers ne soient injectés dans l'empilement à oxydes solides.

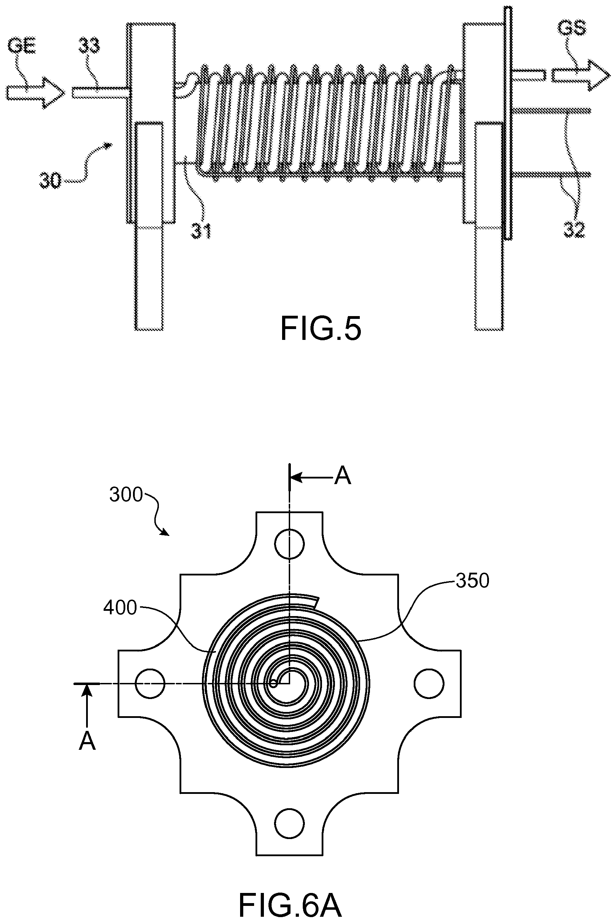

De manière alternative, il est possible de faire passer les gaz par un chauffeur électrique 30 (figure 5) qui comprend une masse inertielle 31 en acier, une résistance chauffante 32 et un tube de conduite des gaz 33 enroulé sur la masse inertielle 31. Un tel chauffeur électrique 30 permet de porter les gaz entrants GE de 20°C à une température d'environ 800°C avant leur introduction (gaz sortants GS) dans l'empilement à oxydes solides.

Cependant, ces deux techniques nécessitent l'ajustement de la température des gaz de manière très précise afin d'assurer le bon fonctionnement du dispositif électrochimique.

Par ailleurs, la mise en œuvre d'une surchauffe selon le principe exposé à la figure 4 nécessite le recours à un assemblage compliqué du fait de la présence d'enroulements, et notamment un cintrage des tubes en boucle. Les tubes en boucle augmentent d'autant le volume du dispositif, et génèrent en outre des difficultés quant à l'assemblage global du dispositif (passage des amenées de courant, des thermocouples...).

De plus, le tube en boucle peut nécessiter un traitement coûteux et long afin d'éviter les pollutions dues à son l'oxydation.

La technique mise en œuvre à la figure 5, quant à elle, présente un encombrement qui n'est pas compatible avec la tendance actuelle de proposer des systèmes de plus en plus compacts.

Un but de la présente invention est alors de proposer un dispositif électrochimique pour lequel la surchauffe des gaz d'entrée et/ou de sortie est simplifiée.

Un autre but de la présente invention est également de proposer un dispositif électrochimique permettant un meilleur contrôle de la température des gaz en entrée de l'empilement à oxydes solides.

Un autre but de la présente invention est également de proposer un dispositif électrochimique pour lequel la mise en œuvre d'une surchauffe des gaz n'entraine pas de gêne lors de l'assemblage du dispositif.

Un autre but de la présente invention est également de proposer un dispositif électrochimique qui présente une meilleure compacité que les dispositifs connus de l'état de la technique.

### EXPOSÉ DE L'INVENTION

Les buts de la présente invention sont, au moins en partie, atteints par un dispositif électrochimique comprenant :
- un empilement à oxydes solides de type SOEC/SOFC fonctionnant à haute température et comprenant une pluralité de cellules électrochimiques élémentaires, chacune des cellules électrochimiques élémentaires étant formée d'un électrolyte intercalé entre deux électrodes de type différent dites, respectivement, anode et cathode ;
- un système de serrage pourvu de deux plaques de serrage entre lesquelles est enserré l'empilement à oxydes solides, chaque plaque comprenant deux faces principales essentiellement parallèles et reliées par un contour, l'une et/ou l'autre des deux plaques de serrage étant pourvu d'au moins un conduit de circulation des gaz qui permet la circulation de gaz d'une entrée de gaz vers une sortie de gaz afin d'alimenter en gaz ou à évacuer des gaz de l'empilement à oxydes solides,
le conduit de circulation comprend au moins un canal, dit canal d'échange thermique, qui s'étend dans le volume de la plaque de serrage selon un plan essentiellement parallèle aux faces principales de ladite plaque, de sorte qu'en fonctionnement, la chaleur produite par l'empilement permette, par rayonnement et/ou par conduction thermique, un échauffement du gaz circulant dans ledit canal.

Les échanges thermique tels que décrits précédemment permettent donc un échauffement du gaz circulant dans le canal soit par rayonnement soit par conduction thermique.

Les échanges thermiques par rayonnement se produisent essentiellement entre le gaz et une source de chaleur, par exemple disposée au droit du dispositif.

Par ailleurs, l'empilement, lorsqu'il est en fonctionnement, produit de la chaleur qui permet, par conduction thermique de chauffer le gaz circulant dans le canal.

Selon l'agencement proposé, les échanges thermiques se produisent majoritairement par conduction thermique, et plus particulièrement représentent 90% des échanges thermiques.

La formation d'un canal d'échange thermique dans le volume d'une des plaques de serrage permet ainsi, par rayonnement et/ou par conduction thermique de la chaleur produite aux niveaux des cellules électrochimiques élémentaires, de surchauffer les gaz alimentant lesdites cellules.

Par ailleurs, ces canaux d'échange thermique permettent la surchauffe des gaz sans nécessiter de pièces ou d'éléments supplémentaires. Il en résulte un dispositif plus simple à mettre œuvre, et ne nécessitant que peu ou pas d'ajustement supplémentaire.

En outre, la configuration proposée selon la présente invention permet de rendre le dispositif plus compact que les dispositifs pourvus d'un système de surchauffe connus de l'état de la technique.

Enfin, contre toute attente, la rigidité des plaques de serrage n'est que peu ou pas affectée par l'au moins un canal d'échange thermique.

Selon un mode de mise en œuvre, l'au moins un canal d'échange thermique forme une spirale ou un serpentin.

Cette géométrie de canal d'échange thermique permet d'augmenter le temps d'échange thermique entre un gaz circulant dans ledit canal et la chaleur produite par rayonnement et/ou par conduction thermique.

Selon un mode de mise en œuvre, l'au moins un canal d'échange thermique comprend deux sous-canaux d'échange thermique formés dans deux sections volumiques de la plaque de serrage à l'aplomb l'une de l'autre selon une direction perpendiculaire à la face principale de la plaque de serrage, avantageusement les deux sections volumiques présentent essentiellement la même forme.

Cette géométrie de canal d'échange thermique permet d'augmenter le temps d'échange thermique entre un gaz circulant dans ledit canal et la chaleur produite par rayonnement et/ou par conduction thermique.

Selon un mode de mise en œuvre, un trou de passage est formé entre les deux sections volumiques rendant communiquant les deux sous-canaux d'échange thermique.

Selon un mode de mise en œuvre, les deux sous-canaux sont agencés de sorte qu'un gaz circulant dans le conduit de circulation, de l'entrée de gaz vers la sortie de gaz, s'écoule successivement dans un des deux sous-canaux, dans le trou de passage et dans l'autre des deux sous-canaux.

Selon un mode de mise en œuvre, l'au moins un conduit de circulation des gaz comprend un premier conduit d'entrée de gaz et un premier conduit de sortie de gaz destinés, respectivement, à alimenter en gaz et à évacuer des gaz d'un type, dit premier type, d'électrode choisi parmi les anodes et les cathodes.

Selon un mode de mise en œuvre, l'au moins un conduit de circulation des gaz comprend également un second conduit d'entrée de gaz et un second conduit de sortie de gaz destinés, respectivement, à alimenter en gaz et à évacuer des gaz d'un autre type, dit second type, d'électrode, différent du premier type, choisi parmi les anodes et les cathodes.

Selon un mode de mise en œuvre, le canal d'échange thermique du premier conduit d'entrée de gaz, dit premier canal d'entrée, et le canal d'échange thermique du premier conduit de sortie de gaz, dit premier canal de sortie, sont formés dans la même plaque de serrage, avantageusement à l'aplomb l'un de l'autre selon une direction perpendiculaire à la face principale de ladite plaque de serrage.

Selon un mode de mise en œuvre, le canal d'échange thermique du second conduit d'entrée de gaz, dit second canal d'entrée, et le canal d'échange thermique du second conduit de sortie de gaz, dit second canal de sortie, sont formés dans la même plaque de serrage, avantageusement à l'aplomb l'un de l'autre selon une direction perpendiculaire à la face principale de ladite plaque de serrage.

Selon un mode de mise en œuvre, le canal d'échange thermique du premier conduit d'entrée de gaz, dit premier canal d'entrée, et le canal d'échange thermique du second conduit de sortie de gaz, dit second canal de sortie, sont formés dans la même plaque de serrage, avantageusement à l'aplomb l'un de l'autre selon une direction perpendiculaire à la face principale de ladite plaque de serrage, et/ou le canal d'échange thermique du second conduit d'entrée de gaz, dit second canal d'entrée, et le canal d'échange thermique du premier conduit de sortie de gaz, dit premier canal de sortie, sont formés dans la même plaque de serrage, avantageusement à l'aplomb l'un de l'autre selon une direction perpendiculaire à la face principale de ladite plaque de serrage.

Selon un mode de mise en œuvre, les conduits d'entrée anodique et d'entrée cathodique, ainsi que les conduits de sortie anodique et de sortie cathodique sont formés dans la même plaque de serrage.

Selon un mode de mise en œuvre, l'au moins un canal présente une section transversale de forme hexagonale.

Selon un mode de mise en œuvre, les plaques de serrage sont réalisées en acier austénitique réfractaire, en particulier de type AISI 310.

Selon un mode de mise en œuvre, les plaques de serrage présentent chacune une épaisseur comprise entre 20 et 30 mm, notamment de l'ordre de 25 mm.

Selon un mode de mise en œuvre, deux plaques terminales viennent s'interposer entre chacune des plaques de serrage et l'empilement d'oxydes solides.

Selon un mode de mise en œuvre, au moins une des deux plaques terminales est isolée électriquement de la plaque de serrage, en interposant une plaque d'isolation électrique entre ladite plaque de serrage et ladite plaque terminale.

Selon un mode de mise en œuvre, le dispositif comprend en outre de moyen configurés pour maintenir mécaniquement les plaques de serrage l'une à l'autre.

Selon un mode de mise en œuvre, le dispositif comprend des moyens configurés pour chauffer un gaz, lesdits moyens étant disposés au droit d'une des plaques de serrage.

Selon un mode de mise en œuvre, des interconnecteurs sont intercalés entre les cellules électrochimiques élémentaires.

### BRÈVE DESCRIPTION DES DESSINS

D'autres caractéristiques et avantages apparaîtront dans la description qui va suivre d'un dispositif électrochimique, donnés à titre d'exemples non limitatifs, en référence aux dessins annexés dans lesquels :
- la figure 1 représente, selon une vue en perspective, un dispositif électrochimique connu de l'état de la technique (document [1]), et sur lequel la présente invention est susceptible d'être mise en œuvre ;
- la figure 2 est une vue schématique éclatée d'un empilement de deux cellules électrochimiques élémentaires connu de l'état de la technique et susceptible d'être mise en œuvre dans le cadre de la présente invention ;
- la figure 3 est une vue schématique montrant le principe de fonctionnement d'une cellule électrochimique élémentaire en mode électrolyseur à oxydes solides à haute température (SOEC), les flèches représentent la circulation des gaz au niveau des électrodes, notamment les flèches en trait plein représentent la circulation des gaz réactif ou produit de réaction, tandis que la flèche en traits interrompus représente la circulation de gaz drainant ;
- la figure 4 illustre le principe de l'architecture d'un four sur lequel un empilement d'électrolyse à haute température (SOEC) ou de pile à combustible (SOFC) fonctionnant à haute température est placé ;
- la figure 5 illustre le principe d'un chauffeur électrique de gaz selon l'art antérieur ;
- la figure 6a est une représentation schématique d'une plaque de serrage selon un plan de coupe parallèle à ses faces principales révélant un canal d'échange thermique en forme de spirale ;
- la figure 6b est une représentation selon une coupe brisée à plans sécants AA et en perspective de la plaque de serrage de la figure 6a ;
- la figure 6c est une représentation selon une coupe brisée à plans sécants AA et en perspective de la plaque de serrage de la figure 6a, et représente notamment un canal d'entrée cathodique et un canal de sortie cathodique formés dans le volume d'une plaque de serrage et à l'aplomb l'un de l'autre ;
- la figure 7a est une représentation schématique d'une autre plaque de serrage selon la présente invention, notamment la figure 7a représente la plaque de serrage par une de ses faces principales ;
- la figure 7b est une représentation schématique de la plaque de serrage de la figure 7a, notamment la figure 7b représente la plaque de serrage selon un plan de coupe parallèle aux faces principales de ladite plaque et révélant le ou les canaux d'échange thermique ;
- la figure 7c est une représentation selon une coupe brisée à plans sécants BB et en perspective de la plaque de serrage de la figure 7a ;
- la figure 7d est une vue en coupe partielle selon un plan de coupe parallèle aux faces principales de la plaque de serrage révélant le premier canal ;
- la figure 7e est une vue en coupe partielle selon un plan de coupe parallèle aux faces principales de la plaque de serrage révélant le second canal ;
- la figure 7f est une vue en coupe partielle selon un plan de coupe parallèle aux faces principales de la plaque de serrage révélant le premier canal et le trou de passage d'une chambre à l'autre;

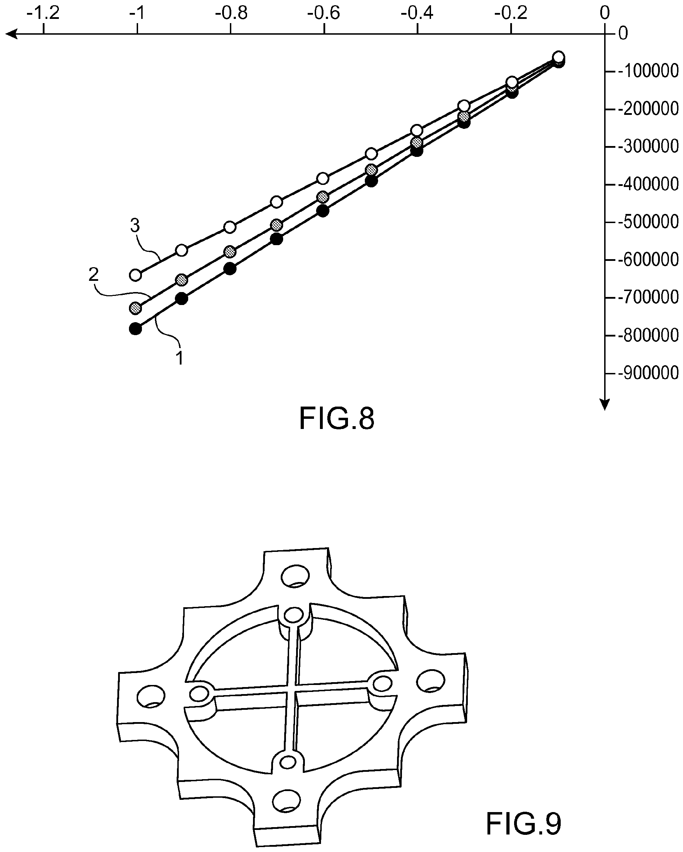

- la figure 8 est un graphique représentant la rigidité (selon l'axe vertical, en Newton), en fonction d'un déplacement (axe horizontal), notamment la courbe 1 représente la rigidité d'une plaque de serrage pleine (connue de l'état de la technique), la courbe 2 représente la rigidité d'une plaque de serrage selon la présente invention, notamment la plaque de serrage comprend quatre section, de même forme, partageant ladite plaque en quatre section égales, chaque section comprenant la première et la seconde section pourvue chacune, respectivement, du premier canal et du second canal, la courbe 3 représente la rigidité d'une plaque de serrage reprenant les quatre section de la plaque de serrage selon la présente invention, les quatre section étant dans ce cas de figure vide ;
- la figure 9 est une représentation schématique de plaque de serrage selon un plan de coupe parallèle aux faces principales de ladite plaque mis en œuvre pour la calcul de la rigidité de la courbe 3 de la figure 8.

### EXPOSÉ DÉTAILLÉ DE MODES DE RÉALISATION PARTICULIERS

La présente invention propose un dispositif électrochimique 100 pourvu d'une pluralité de cellules électrochimiques élémentaires à oxydes solides enserrées entre deux plaques de serrage.

Par « plaque de serrage », on entend une plaque de forme généralement plane, qui comprend deux faces principales reliées par un contour, et qui lorsqu'elles sont assemblées par paires sont destinées à maintenir la cohésion d'un empilement de cellules électrochimiques élémentaires.

Le dispositif selon la présente invention comprend notamment un conduit de circulation de gaz permettant une surchauffe desdits gaz par effet radiatif et/ou par conduction thermique, notamment un effet radiatif et/ou de conduction thermique relatif à la chaleur produite par les cellules électrochimiques élémentaires.

La disposition du conduit de circulation dans l'une ou l'autre des plaques de serrage, tel que décrit dans la suite de l'énoncé, rend le dispositif plus simple à mettre en œuvre, et surtout plus compact.

La réalisation de cette invention, difficilement envisageable par le passé pour des raisons de coût de fabrication d'une plaque de serrage pourvu d'un conduit de circulation selon les termes de la présente invention, est désormais possible depuis l'avènement de moyens de fabrication additifs, et notamment l'impression 3D.

L'invention est maintenant décrite en relation avec les figures 1 à 9.

Le dispositif électrochimique 100 selon la présente invention est destiné à être mis en œuvre pour l'électrolyse à haute température (mode « SOEC ») ou en tant que pile à combustible (mode « SOFC »).

Le dispositif électrochimique 100 comprend un empilement 200 à oxydes solides de type SOEC/SOFC fonctionnant à haute température (figures 1 et 2) ;

L'empilement 200 comprend notamment une pluralité de cellules électrochimiques élémentaires 210 formées chacune, et dans l'ordre, d'une cathode 210c, d'un électrolyte 210e, et d'une anode 210a.

Il est entendu, sans qu'il soit nécessaire de le préciser que « la cathode », « l'anode » et « l'électrolyte » sont de forme généralement plane, par exemple sous forme de couches, et comprennent deux faces principales essentiellement parallèles et reliées par un contour.

En d'autres termes, une cellule électrochimique élémentaire 210 est un assemblage de couches céramiques, notamment une anode, un électrolyte et une cathode. L'électrolyte comprend à cet égard une couche conductrice d'ions solide et dense, tandis que l'anode et la cathode sont des couches poreuses.

L'empilement 200 peut également comprendre des interconnecteurs intermédiaires 230, chacun des interconnecteurs intermédiaires 230 étant intercalé entre deux cellules électrochimiques élémentaires adjacentes 210 (figure 2).

Les interconnecteurs intermédiaires 230 assurent une connexion électrique entre la cathode et l'anode de deux cellules électrochimiques élémentaires adjacentes 210.

Les interconnecteurs intermédiaires délimitent également des compartiments fluidiques au niveau de la surface des électrodes avec lesquelles il sont en contact.

En particulier, la face d'un interconnecteur intermédiaire 230 en contact avec une anode 210a d'une cellule électrochimique élémentaire 210 délimite un compartiment dit compartiment anodique 230a.

De manière équivalente, la face d'un interconnecteur intermédiaire 230 en contact avec une cathode 210c d'une cellule électrochimique élémentaire 210 délimite un compartiment dit compartiment cathodique 230c.

Chacun des compartiments anodique 230a et cathodique 230c permet la circulation de gaz, notamment pour la distribution et la collecte desdits gaz.

Plus particulièrement, dans le cadre d'une mise en œuvre de l'électrolyse de l'eau, le compartiment cathodique 230c assure, au niveau de la cathode, une distribution de vapeur d'eau et permet l'évacuation de dihydrogène, tandis que le compartiment anodique 230a assure, au niveau de l'anode, la circulation d'un gaz drainant et l'évacuation de dioxygène.

Le dispositif électrochimique peut également comprendre des plaques terminales 240a et 240b disposées de part et d'autre de l'empilement 200 (figure 1).

L'ensemble comprenant l'empilement 200 et les plaques terminales 240a et 240b peut être traversé par des tubes métalliques de distribution et d'évacuation de gaz (non représentés).

Notamment, les tubes métalliques peuvent comprendre deux tubes de distribution de gaz, dits tube de distribution anodique et tube de distribution cathodique, pour la distribution de gaz, respectivement, dans les compartiments anodiques 230a et les compartiments cathodiques 230c.

De manière équivalente, les tubes métalliques peuvent comprendre deux tubes d'évacuation de gaz, dits tube d'évacuation anodique et tube d'évacuation cathodique, pour l'évacuation de gaz, respectivement, des compartiments anodiques 230a et compartiments cathodiques 230c (figure 2).

Le dispositif électrochimique 100 comprend également un système de serrage pourvu de deux plaques de serrage, dites respectivement, première plaque de serrage 300 et seconde plaque de serrage 310 (figure 1).

Chaque plaque de serrage comprend deux faces principales essentiellement parallèles et reliées par un contour.

En particulier, l'empilement 200 est enserré dans les deux plaques de serrage 300, 310.

Dès lors que les plaques terminales sont considérées, ces dernières viennent chacune s'interposer entre une plaque de serrage et l'empilement 200.

Selon cette configuration, au moins une des deux plaques terminales peut être isolée électriquement de la plaque de serrage, en interposant une plaque d'isolation électrique entre ladite plaque de serrage et ladite plaque terminale.

Des moyens configurés pour maintenir mécaniquement les plaques de serrage l'une à l'autre sont également mis en œuvre. Les moyens peuvent notamment comprendre des tiges de serrage boulonnées aux plaques de serrage. Ces moyens sont, à cet égard, décrits dans le document [1] cité à la fin de la description.

Les plaques de serrage peuvent être réalisées en acier austénitique réfractaire, en particulier de type AISI 310 ou inconel 600. Les aciers inoxydables alliés sont particulièrement avantageux car ils présentent une excellente résistance aux hautes températures. Ces aciers sont notamment très résistants au fluage et aux déformations, et résistent aux agressions environnementales.

Les plaques de serrage 300, 310 peuvent présenter chacune une épaisseur comprise entre 20 et 30 mm, notamment de l'ordre de 25 mm.

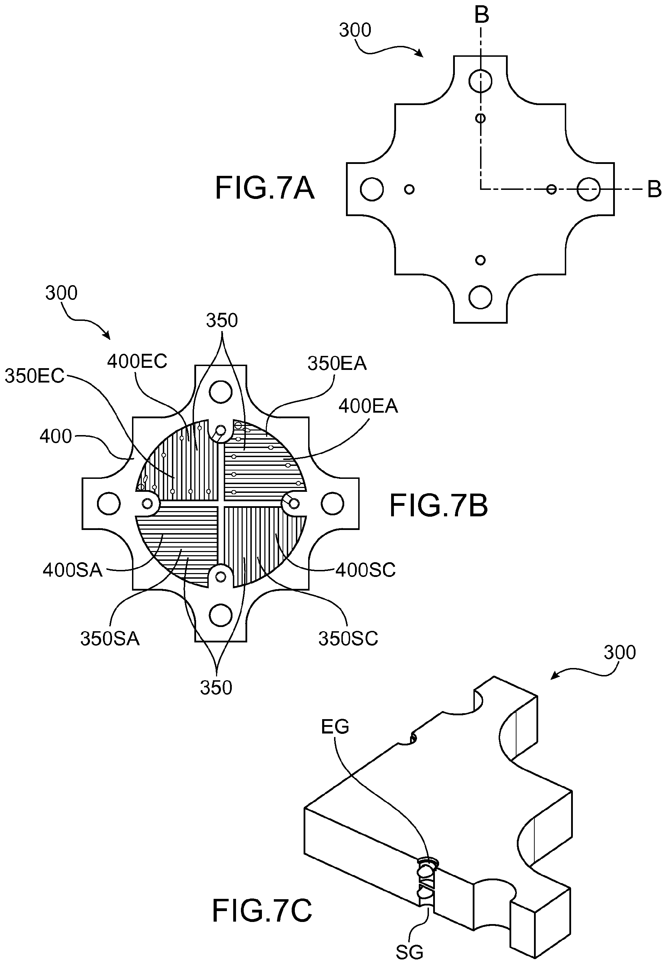

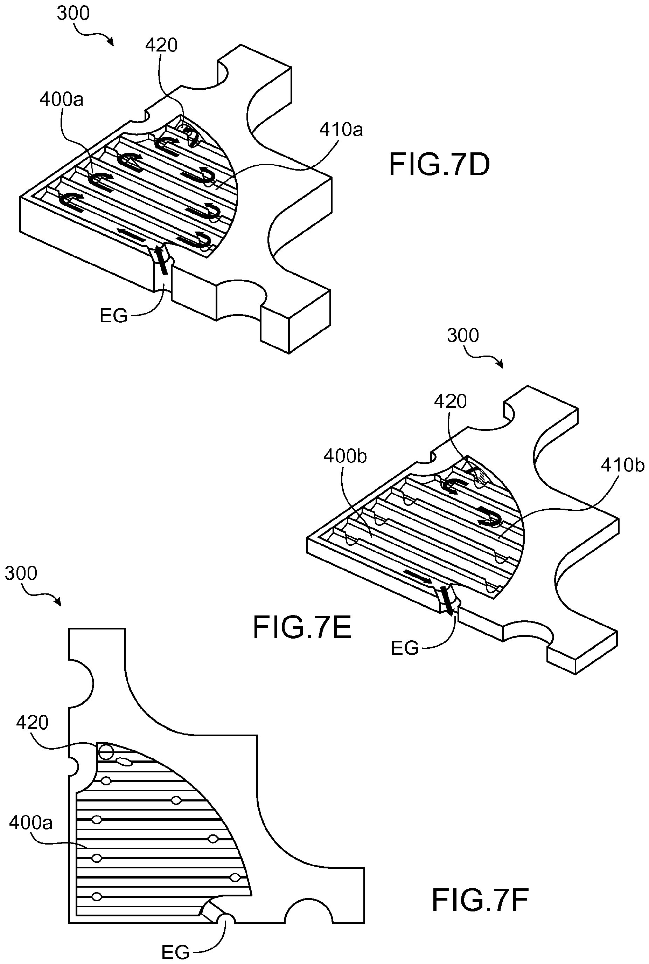

L'une et/ou l'autre des deux plaques de serrage 300, 310 est pourvue d'au moins un conduit de circulation 350 des gaz qui permet la circulation de gaz d'une entrée de gaz EG vers une sortie de gaz SG afin d'alimenter en gaz ou à évacuer des gaz de l'empilement 200 à oxydes solides (figures 6a-6b, 7b).

L'entrée EG et la sortie SG de gaz sont disposées, respectivement, sur l'une et l'autre des faces principales de la plaque de serrage 300, 310.

Selon la présente invention, le conduit de circulation 350 comprend au moins un canal, dit canal d'échange thermique 400, qui s'étend dans le volume de la plaque de serrage selon un plan essentiellement parallèle aux faces principales de ladite plaque, de sorte qu'en fonctionnement, la chaleur produite par l'empilement 200 permette, par conduction thermique, un échauffement du gaz circulant dans ledit canal.

Il est entendu qu'un canal d'échange thermique selon les termes de la présente invention correspond à un canal d'une longueur appréciable par rapport à l'épaisseur de la plaque de serrage dans laquelle il est formé. Plus particulièrement, la longueur du canal d'échange thermique est adaptée pour optimiser les échanges thermiques par rayonnement et/ou par conduction thermique.

Par ailleurs, il est entendu qu'un canal d'échange thermique dans le volume d'une plaque de serrage est nécessairement à distance des faces principales de ladite plaque. En d'autres termes, le canal d'échange thermique est enterré dans le volume de la plaque de serrage.

La formation d'un canal d'échange thermique dans le volume d'une des plaques de serrage permet ainsi, par conduction thermique et/ou rayonnement de la chaleur produite au niveau cellules électrochimiques élémentaires, de surchauffer les gaz alimentant lesdites cellules. Ces échanges thermiques destinés à surchauffer les gaz permettent également d'améliorer le bilan thermique associé au fonctionnement du dispositif électrochimique. En d'autres termes, l'au moins un canal d'échange thermique permet de limiter les pertes thermiques.

Par ailleurs, ce canal d'échange thermique permet la surchauffe des gaz sans nécessiter de pièces ou d'éléments supplémentaires. Il en résulte un dispositif plus simple à mettre œuvre, et ne nécessitant que peu ou pas d'ajustements supplémentaires.

En outre, la configuration proposée selon la présente invention permet de rendre le dispositif plus compact que les dispositifs pourvus d'un système de surchauffe connus de l'état de la technique.

Enfin, contre toute attente, la rigidité des plaques de serrage n'est que peu ou pas affectée par ledit canal d'échange thermique.

Afin de maximiser les échanges thermiques par conduction thermique et/ou par effet radiatif, l'au moins un canal d'échange thermique 400 peut former des circonvolutions, et notamment former une spirale ou un serpentin.

À titre d'exemple, la figure 6a représente une vue en coupe selon un plan de couple parallèle aux faces principales d'une plaque de serrage. La figure 6a révèle notamment le canal d'échange thermique en forme de spirale. Un canal d'échange thermique en forme de spirale permet d'augmenter le temps d'échange thermique du gaz circulant dans ledit canal avec le dispositif électrochimique 100 avant son injection au niveau des cellules électrochimiques élémentaires.

Toujours à titre d'exemple, la figure 7b représente une vue en coupe d'une plaque de serrage illustrée en figure 7a selon un plan de coupe parallèle aux faces principales. La figure 7b révèle notamment quatre canaux d'échange thermique en forme de serpentin. Un canal d'échange thermique en forme de serpentin permet d'augmenter le temps d'échange thermique du gaz circulant dans ledit canal avec le dispositif électrochimique 100 avant son injection au niveau des cellules électrochimiques élémentaires.

Indépendamment des exemples précités, le canal d'échange thermique peut présenter une épaisseur comprise entre 1 m et 4 m.

Par exemple, sur une section représentant un quart de la plaque de serrage, d'une épaisseur de 30 mm, le canal peut présenter une longueur de 0,63 m par section (selon la première section et selon la seconde section). Il est également possible selon la présente invention de considérer un plus grand nombre de section, et augmente d'autant la longueur du canal d'échange thermique.

Par ailleurs, le canal peut présenter un profil hexagonal de diamètre égal à 11 mm.

Enfin il est également possible de considérer une sortie directe de gaz sortant et ne pas récupérer leur énergie thermique.

De manière générale, tout canal d'échange thermique enterré dans le volume d'une plaque d'échange et qui présente des circonvolutions permet d'augmenter le temps d'échange thermique entre le gaz circulant dans ledit canal et le dispositif électrochimique 100.

Par ailleurs, la présente invention, bien que présentant un canal d'échange thermique en forme de spirale ou de serpentin, ne doit pas être limitée spécifiquement à ces deux formes.

De manière particulièrement avantageuse, le canal d'échange thermique 400 peut comprendre deux sous-canaux d'échange thermique, dits respectivement premier sous-canal 400a et second sous-canal 400b.

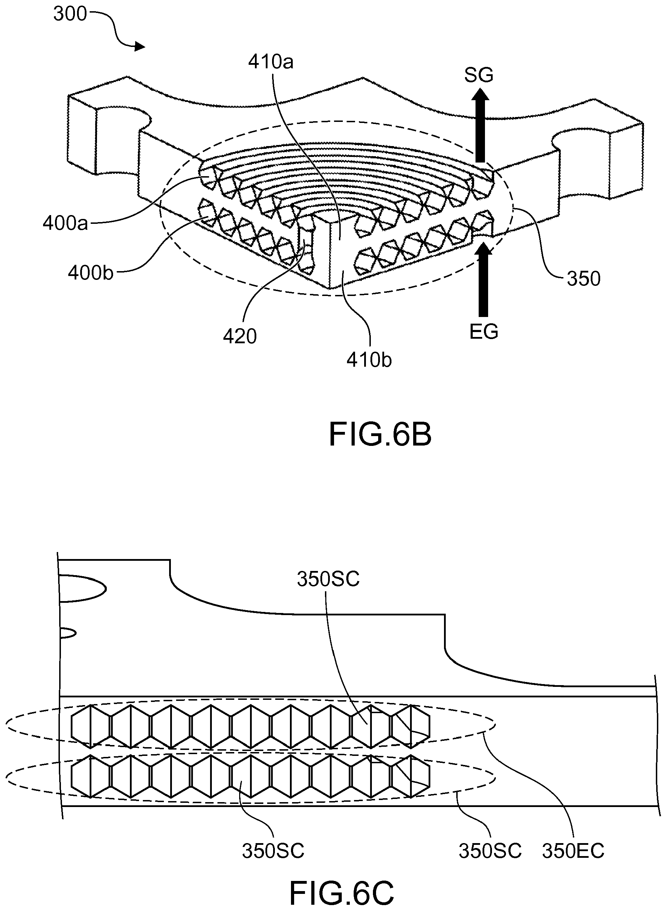

Notamment, le premier sous-canal 400a et le second sous-canal 400b sont formés dans deux sections volumiques distinctes dites, respectivement, première section 410a et seconde section 410b, de la plaque de serrage (figure 6b et figures 7d-7e).

De manière particulièrement avantageuse, la première section 410a et la seconde section 410b sont à l'aplomb l'une de l'autre selon une direction perpendiculaire à la face principale de la plaque de serrage.

Toujours de manière avantageuse, les deux sections volumiques présentent essentiellement la même forme.

Le premier sous-canal 400a et le second sous-canal 400b sont communiquant via un trou de passage 420 reliant les première et seconde sections. Notamment, le premier sous-canal 400a et le second sous-canal 400b sont agencés de sorte qu'un gaz circulant dans le conduit de circulation, de l'entrée de gaz EG vers la sortie de gaz SG, s'écoule successivement dans le premier sous-canal 400a, dans le trou de passage 420 et dans le second sous-canal 400b.

À titre d'exemple, la figure 6b représente une section de la pièce de serrage illustrée à la figure 6a d'une part en coupe brisée à plans sécants AA et d'autre part selon un plan de coupe transversal. La figure 6b représente notamment le premier sous-canal 400a et le second sous-canal 400b dans leur section volumique respective. Le trou de passage 420, repéré sur l'une et l'autre des figures 6a et 6b, relie le premier sous-canal 400a et le second sous-canal 400b à proximité du centre du motif spirale dessinée par lesdits sous-canaux 400a et 400b. Le trou de passage 420 permet de doubler la longueur du canal d'échange thermique. L'entrée de gaz EG est disposée sur une face principale de la plaque de serrage, tandis que la sortie de gaz SG est disposée sur l'autre face principale de la plaque de serrage. Ainsi, un gaz injecté au niveau de l'entrée EG, s'écoule dans l'ordre dans le premier sous-canal 400a, le trou de passage 420 et le second sous-canal 400b. En sortie SG, le gaz peut être acheminé, via un tube de distribution anodique ou un tube de distribution cathodique (non représentés sur les figures), respectivement, dans les compartiments anodiques 230aou les compartiments cathodiques 230c. Inversement, le gaz injecté au niveau de l'entrée EG peut être un gaz en provenance de l'empilement 200, et notamment un gaz résultant de réactions électrochimiques se produisant au niveau des anodes ou des cathodes.

Toujours à titre d'exemple, les figures 7d et 7e représentent, respectivement, selon des plans de coupe parallèles aux faces principales de la plaque de serrage, le premier sous-canal 400a et le sous-second canal 400b. La figure 7d et la figure 7e représentent en particulier le premier sous-canal 400a et le second sous-canal 400b dans leur section volumique respective. Le trou de passage 420, repéré sur les figures 7d à 7f, relie le premier sous-canal 400a et le second sous-canal 400b. L'entrée de gaz EG est disposée sur une face principale de la plaque de serrage, tandis que la sortie de gaz SG est disposée sur l'autre face principale de la plaque de serrage. Ainsi, un gaz injecté au niveau de l'entrée EG, s'écoule dans l'ordre dans le premier sous-canal 400a, le trou de passage 420 et le second sous-canal 400b. En sortie SG, le gaz peut être acheminé, via un tube de distribution anodique ou un tube de distribution cathodique (non représentés sur les figures), respectivement, dans les compartiments anodiques 230a ou les compartiments cathodiques 230c. Inversement, le gaz injecté au niveau de l'entrée EG peut être un gaz en provenance de l'empilement 200, et notamment un gaz résultant de réactions électrochimiques se produisant au niveau des anodes ou des cathodes.

De manière avantageuse, l'au moins un conduit de circulation des gaz 350 peut comprendre comprend un premier conduit d'entrée de gaz et un premier conduit de sortie de gaz destinés, respectivement, à alimenter en gaz et à évacuer des gaz d'un type, dit premier type, d'électrode choisi parmi les anodes et les cathodes.

Par exemple, l'au moins un conduit de circulation des gaz comprend un conduit d'entrée cathodique 350EC (premier conduit d'entrée de gaz) et un conduit de sortie cathodique 350SC (premier conduit de sortie de gaz), destinés, respectivement, à alimenter en gaz les cathodes de l'empilement 200 à oxydes solides, et à évacuer des gaz desdites cathodes.

Le conduit d'entrée cathodique 350EC et le conduit de sortie cathodique 350SC comprennent chacun un canal d'échange thermique dit, respectivement, canal d'entrée cathodique 400EC et canal de sortie cathodique 400SC (figure 7b). De manière particulièrement avantageuse, le canal d'entrée cathodique 400EC et canal de sortie cathodique 400SC sont formés dans la même plaque de serrage, et en particulier à l'aplomb l'un de l'autre selon une direction perpendiculaire à la face principale de ladite plaque de serrage (illustré à la figure 6c). Selon cette configuration, les gaz sortants permettent également de chauffer les gaz entrants.

De manière complémentaire, l'au moins un conduit de circulation des gaz 350 peut également comprendre un second conduit d'entrée de gaz et un second conduit de sortie de gaz destinés, respectivement, à alimenter en gaz et à évacuer des gaz d'un autre type, dit second type, d'électrode, différent du premier type, choisi parmi les anodes et les cathodes.

Par exemple, l'au moins un conduit de circulation des gaz comprend un conduit d'entrée anodique 350EA (second conduit d'entrée de gaz) et un conduit de sortie anodique 350SA (un second conduit de sortie de gaz), destinés, respectivement, à alimenter en gaz les anodes de l'empilement 200 à oxydes solides, et à évacuer des gaz desdites anodes.

Le conduit d'entrée anodique 350EA et le conduit de sortie anodique 350SA comprennent chacun un canal d'échange thermique dit, respectivement, canal d'entrée anodique 400EA et canal de sortie anodique 400SA (figure 7b).

De manière particulièrement avantageuse, le canal d'entrée anodique 400EA et le canal de sortie anodique 400SA sont formés dans la même plaque de serrage, et en particulier à l'aplomb l'un de l'autre selon une direction perpendiculaire à la face principale de ladite plaque de serrage.

Selon une autre alternative, le canal d'entrée cathodique 400EC et le canal de sortie anodique 400SA sont formés dans la même plaque de serrage, et en particulier à l'aplomb l'un de l'autre selon une direction perpendiculaire à la face principale de ladite plaque de serrage. Toujours selon cette alternative, le canal d'entrée anodique 400EA et le canal de sortie cathodique 400SC sont formés dans la même plaque de serrage, et en particulier à l'aplomb l'un de l'autre selon une direction perpendiculaire à la face principale de ladite plaque de serrage.

La vue en coupe de la plaque de serrage représentée à la figure 7b révèle la présence des quatre canaux d'échanges thermiques 400EA, 400SA, 400EC, et 400SC. La figure 7b représente notamment le canal d'entrée anodique 400EA, le canal de sortie anodique 400SA, le canal d'entrée cathodique 400EC et le canal de sortie cathodique 400SC. Chacun de ses quatre canaux peut comprendre un premier sous-canal et un second sous-canal formés, respectivement, dans une première section et une seconde section, et communiquant via un trou de passage.

Un tel agencement permet des échanges thermiques tant avec les gaz entrant qu'avec les gaz sortant.

Une plaque de serrage pourvue d'au moins un canal de circulation des gaz selon la présente invention peut être fabriquée par une technique de fabrication additive, et notamment par impression 3D. L'impression 3D comprend en particulier des séquences de dépôt de matière, de fusion de cette dernière par apport de chaleur (par exemple avec un laser, à l'aide d'une résistance chauffante, un faisceau d'électrons, ou encore un chauffage UV), et enfin de solidification de la matière en fusion par refroidissement. La formation de la plaque de serrage par impression 3D est donc exécutée couche par couche. À l'issue de cette phase d'impression, une étape de séchage est généralement exécutée. La plaque de serrage peut alors subir un traitement thermique destiné à améliorer sa dureté ou tenue mécanique,

Les inventeurs ont enfin démontré qu'une plaque de serrage pourvue d'un conduit de circulation de gaz selon les termes de la présente invention offre une rigidité mécanique compatible avec leur mise en œuvre pour le serrage d'un empilement de cellules électrochimiques élémentaires.

En particulier, les inventeurs ont calculé la perte de rigidité d'une plaque de serrage pourvue d'un circuit de distribution de gaz (courbe 2de la figure 8) par rapport à une plaque de serrage pleine (courbe 1de la figure 8). Cette perte est alors limitée à 17 %, ce qui assure une tenue mécanique suffisante du dispositif électrochimique 100.

Les inventeurs ont également observé une relativement faible perte de rigidité (courbe 3 figure 8) d'une plaque de serrage formée de sections creuses telles que représentée à la figure 9.

### RÉFÉRENCES

[1] FR 3 045 215

## Revendications

1. Dispositif électrochimique comprenant :
- un empilement (200) à oxydes solides de type SOEC/SOFC fonctionnant à haute température et comprenant une pluralité de cellules électrochimiques élémentaires (210), chacune des cellules électrochimiques élémentaires (210) étant formée d'un électrolyte (210e) intercalé entre deux électrodes de type différent dites respectivement anode (210a) et cathode (210c) ;
- un système de serrage pourvu de deux plaques de serrage (300, 310) entre lesquelles est enserré l'empilement (200) à oxydes solides, chaque plaque comprenant deux faces principales essentiellement parallèles et reliées par un contour, l'une et/ou l'autre des deux plaques de serrage (300, 310) étant pourvu d'au moins un conduit de circulation (350) des gaz qui permet la circulation de gaz d'une entrée de gaz (EG) vers une sortie de gaz (SG) afin d'alimenter en gaz ou à évacuer des gaz de l'empilement (200) à oxydes solides,
le conduit de circulation étant **caractérisé en ce qu'**il comprend au moins un canal, dit canal d'échange thermique (400), qui s'étend dans le volume de la plaque de serrage selon un plan essentiellement parallèle aux faces principales de ladite plaque, de sorte qu'en fonctionnement, la chaleur produite par l'empilement (200) permette, par rayonnement et/ou par conduction thermique, un échauffement du gaz circulant dans ledit canal.

2. Dispositif selon la revendication 1, dans lequel l'au moins un canal d'échange thermique (400) forme une spirale ou un serpentin.

3. Dispositif selon la revendication 1 ou 2, dans lequel l'au moins un canal d'échange thermique (400) comprend deux sous-canaux d'échange thermique (400a, 400b) formés dans deux sections volumiques (410a, 410b) de la plaque de serrage à l'aplomb l'une de l'autre selon une direction perpendiculaire à la face principale de la plaque de serrage, avantageusement les deux sections volumiques (410a, 410b) présentent essentiellement la même forme.

4. Dispositif selon la revendication 3, dans lequel un trou de passage (420) est formé entre les deux sections volumiques (410a, 410b) rendant communiquant les deux sous-canaux d'échange thermique (400a, 400b).

5. Dispositif selon la revendication 4, dans lequel les deux sous-canaux sont agencés de sorte qu'un gaz circulant dans le conduit de circulation, de l'entrée de gaz (EG) vers la sortie de gaz (SG), s'écoule successivement dans un des deux sous-canaux, dans le trou de passage et dans l'autre des deux sous-canaux.

6. Dispositif selon l'une des revendications 1 à 5, dans lequel l'au moins un conduit de circulation des gaz (350) comprend un premier conduit d'entrée de gaz (350EC, 350EA) et un premier conduit de sortie de gaz (350SE, 350SA) destinés, respectivement, à alimenter en gaz et à évacuer des gaz d'un type, dit premier type, d'électrode choisi parmi les anodes et les cathodes.

7. Dispositif selon la revendication 6, dans lequel l'au moins un conduit de circulation des gaz (350) comprend également un second conduit d'entrée de gaz (350EC, 350EA) et un second conduit de sortie de gaz (350SE, 350SA) destinés, respectivement, à alimenter en gaz et à évacuer des gaz d'un autre type, dit second type, d'électrode, différent du premier type, choisi parmi les anodes et les cathodes.

8. Dispositif selon la revendication 6 ou 7, dans lequel le canal d'échange thermique (400EA, 400EC) du premier conduit d'entrée de gaz, dit premier canal d'entrée (400EA, 400EC), et le canal d'échange thermique du premier conduit de sortie de gaz, dit premier canal de sortie (400SA, 400SC), sont formés dans la même plaque de serrage, avantageusement à l'aplomb l'un de l'autre selon une direction perpendiculaire à la face principale de ladite plaque de serrage.

9. Dispositif selon la revendication 7 et 8, dans lequel le canal d'échange thermique (400EA, 400EC) du second conduit d'entrée de gaz, dit second canal d'entrée (400EA, 400EC), et le canal d'échange thermique du second conduit de sortie de gaz, dit second canal de sortie (400SA, 400SC), sont formés dans la même plaque de serrage, avantageusement à l'aplomb l'un de l'autre selon une direction perpendiculaire à la face principale de ladite plaque de serrage.

10. Dispositif selon la revendication 7, dans lequel le canal d'échange thermique (400EA, 400EC) du premier conduit d'entrée de gaz, dit premier canal d'entrée (400EA, 400EC), et le canal d'échange thermique du second conduit de sortie de gaz, dit second canal de sortie (400SA, 400SC), sont formés dans la même plaque de serrage, avantageusement à l'aplomb l'un de l'autre selon une direction perpendiculaire à la face principale de ladite plaque de serrage, et/ou le canal d'échange thermique (400EA, 400EC) du second conduit d'entrée de gaz, dit second canal d'entrée (400EA, 400EC), et le canal d'échange thermique du premier conduit de sortie de gaz, dit premier canal de sortie (400SA, 400SC), sont formés dans la même plaque de serrage, avantageusement à l'aplomb l'un de l'autre selon une direction perpendiculaire à la face principale de ladite plaque de serrage.

11. Dispositif selon l'une des revendications 1 à 10, dans lequel l'au moins un canal présente une section transversale de forme hexagonale.

12. Dispositif selon l'une des revendications 1 à 11, dans lequel les plaques de serrage (300, 310) sont réalisées en acier austénitique réfractaire, en particulier de type AISI 310.

13. Dispositif selon l'une des revendications 1 à 12, dans lequel les plaques de serrage (300, 310) présentent chacune une épaisseur comprise entre 20 et 30 mm, notamment de l'ordre de 25 mm.

14. Dispositif selon l'une des revendications 1 à 13, dans lequel deux plaques terminales (240a, 240b) viennent s'interposer entre chacune des plaques de serrage (300, 310) et l'empilement (200) d'oxydes solides.

15. Dispositif selon l'une des revendications 1 à 14, dans lequel au moins une des deux plaques terminales (240a, 240b) est isolée électriquement de la plaque de serrage, en interposant une plaque d'isolation électrique entre ladite plaque de serrage et ladite plaque terminale.

## Patentansprüche

1. Elektrochemische Vorrichtung, umfassend:
- einen Stapel (200) aus Festoxiden vom Typ SOEC/SOFC, der bei hoher Temperatur funktioniert, und eine Vielzahl von elektrochemischen Elementarzellen (210) umfasst, wobei jede der elektrochemischen Elementarzellen (210) aus einem Elektrolyten (210e) gebildet ist, der zwischen zwei Elektroden unterschiedlichen Typs, Anode (210a) beziehungsweise Kathode (210c) genannt, eingeschoben ist;
- ein Klemmsystem, das mit zwei Klemmplatten (300, 310) ausgestattet ist, zwischen denen der Stapel aus Festoxiden (200) eingeklemmt ist, wobei jede Platte zwei Hauptflächen umfasst, die im Wesentlichen parallel und durch eine Kontur miteinander verbunden sind, wobei die eine und/oder die andere der zwei Klemmplatten (300, 310) mit mindestens einer Gaszirkulationsleitung (350) ausgestattet ist, die die Zirkulation von Gas von einem Gaseinlass (EG) zu einem Gasauslass (SG) ermöglicht, um den Stapel (200) aus Festoxiden mit Gas zu versorgen oder Gase davon abzuleiten,
wobei die Zirkulationsleitung **dadurch gekennzeichnet ist, dass** sie mindestens einen Kanal, Wärmeaustauschkanal (400) genannt, umfasst, der sich im Volumen der Klemmplatte so in einer Ebene im Wesentlichen parallel zu den Hauptflächen der Platte erstreckt, dass im Betrieb die durch den Stapel (200) erzeugte Hitze eine Erwärmung des im Kanal zirkulierenden Gases durch Wärmestrahlung und/oder -leitung ermöglicht.

2. Vorrichtung nach Anspruch 1, wobei der mindestens eine Wärmeaustauschkanal (400) eine Spirale oder eine Schlange bildet.

3. Vorrichtung nach Anspruch 1 oder 2, wobei der mindestens eine Wärmeaustauschkanal (400) zwei Wärmeaustausch-Teilkanäle (400a, 400b) umfasst, die in zwei Volumenabschnitten (410a, 410b) der Klemmplatte ausgebildet sind, lotrecht zueinander, in einer Richtung senkrecht zur Hauptfläche der Klemmplatte, wobei die zwei Volumenabschnitte (410a, 410b) vorteilhafterweise im Wesentlichen dieselbe Form aufweisen.

4. Vorrichtung nach Anspruch 3, wobei ein Durchgangsloch (420) zwischen den zwei Volumenabschnitten (410a, 410b) ausgebildet ist, das die zwei Wärmeaustausch-Teilkanäle (400a, 400b) miteinander verbindet.

5. Vorrichtung nach Anspruch 4, wobei die zwei Teilkanäle so eingerichtet sind, dass ein Gas, das in der Zirkulationsleitung zirkuliert, vom Gaseinlass (EG) zum Gasauslass (SG), nacheinander in einen der zwei Teilkanäle, ins Durchgangsloch und in den anderen der zwei Teilkanäle strömt.

6. Vorrichtung nach einem der Ansprüche 1 bis 5, wobei die mindestens eine Gaszirkulationsleitung (350) eine erste Gaseinlassleitung (350EC, 350EA) und eine erste Gasauslassleitung (350SE, 350SA) umfasst, die bestimmt sind, um die Elektrode eines Typs, erster Typ genannt, der aus den Anoden und den Kathoden ausgewählt wird, jeweils mit Gas zu versorgen oder Gase davon abzuleiten.

7. Vorrichtung nach Anspruch 6, wobei die mindestens eine Gaszirkulationsleitung (350) auch eine zweite Gaseinlassleitung (350EC, 350EA) und eine zweite Gasauslassleitung (350SE, 350SA) umfasst, die bestimmt sind, um die Elektrode eines anderen Typs, zweiter Typ genannt, der sich vom ersten Typ unterscheidet, der aus den Anoden und den Kathoden ausgewählt wird, jeweils mit Gas zu versorgen oder Gase davon abzuleiten.

8. Vorrichtung nach Anspruch 6 oder 7, wobei der Wärmeaustauschkanal (400EA, 400EC) der ersten Gaseinlassleitung, erster Einlasskanal (400EA, 400EC) genannt, und der Wärmeaustauschkanal der ersten Gasauslassleitung, erster Auslasskanal (400SA, 400SC) genannt, in derselben Klemmplatte ausgebildet sind, vorteilhafterweise lotrecht zueinander, in einer Richtung senkrecht zur Hauptfläche der Klemmplatte.

9. Vorrichtung nach Anspruch 7 und 8, wobei der Wärmeaustauschkanal (400EA, 400EC) der zweiten Gaseinlassleitung, zweiter Einlasskanal (400EA, 400EC) genannt, und der Wärmeaustauschkanal der zweiten Gasauslassleitung, zweiter Auslasskanal (400SA, 400SC) genannt, in derselben Klemmplatte ausgebildet sind, vorteilhafterweise lotrecht zueinander, in einer Richtung senkrecht zur Hauptfläche der Klemmplatte.

10. Vorrichtung nach Anspruch 7, wobei der Wärmeaustauschkanal (400EA, 400EC) der ersten Gaseinlassleitung, erster Einlasskanal (400EA, 400EC) genannt, und der Wärmeaustauschkanal der zweiten Gasauslassleitung, zweiter Auslasskanal (400SA, 400SC) genannt, in derselben Klemmplatte ausgebildet sind, vorteilhafterweise lotrecht zueinander, in einer Richtung senkrecht zur Hauptfläche der Klemmplatte, und/oder der Wärmeaustauschkanal (400EA, 400EC) der zweiten Gaseinlassleitung, zweiter Einlasskanal (400EA, 400EC) genannt, und der Wärmeaustauschkanal der ersten Gasauslassleitung, erster Auslasskanal (400SA, 400SC) genannt, in derselben Klemmplatte ausgebildet sind, vorteilhafterweise lotrecht zueinander, in einer Richtung senkrecht zur Hauptfläche der Klemmplatte.

11. Vorrichtung nach einem der Ansprüche 1 bis 10, wobei der mindestens eine Kanal einen sechseckigen Querschnitt aufweist.

12. Vorrichtung nach einem der Ansprüche 1 bis 11, wobei die Klemmplatten (300, 310) aus hitzebeständigem Austenitstahl hergestellt sind, insbesondere vom Typ AISI 310.

13. Vorrichtung nach einem der Ansprüche 1 bis 12, wobei die Klemmplatten (300, 310) jeweils eine Dicke von 20 bis 30 mm aufweisen, besonders im Bereich von 25 mm.

14. Vorrichtung nach einem der Ansprüche 1 bis 13, wobei zwei Endplatten (240a, 240b) zwischen jeder der Klemmplatten (300, 310) und dem Stapel (200) aus Festoxiden angeordnet sind.

15. Vorrichtung nach einem der Ansprüche 1 bis 14, wobei mindestens eine der zwei Endplatten (240a, 240b) elektrisch von der Klemmplatte isoliert wird, indem eine Platte mit elektrischer Isolierung zwischen der Klemmplatte und der Endplatte angeordnet wird.

## Claims

1. An electrochemical device comprising:
- a SOEC/SOFC type solid oxide stack (200) operating at high temperature and comprising a plurality of elementary electrochemical cells (210), each of the elementary electrochemical cells (210) being formed of an electrolyte (210e) interposed between two electrodes of different type called respectively anode (210a) and cathode (210c);
- a clamping system provided with two clamping plates (300, 310) between which the solid oxide stack (200) is clamped, each plate comprising two main faces which are essentially parallel and connected by a contour, one and/or the other of the two clamping plates (300, 310) being provided with at least one gas circulation conduit (350) which allows the circulation of gas from a gas inlet (EG) to a gas outlet (SG) in order to supply gas or to discharge gases from the solid oxide stack (200),
the circulation conduit being **characterised in that** it comprises at least one channel, called heat exchange channel (400), which extends in the volume of the clamping plate according to a plane which is essentially parallel to the main faces of said plate, such that in operation, the heat produced by the stack (200) allows, by radiation and/or by thermal conduction, a heating of the gas circulating in said channel.

2. The device according to claim 1, wherein the at least one heat exchange channel (400) forms a spiral or a coil.

3. The device according to claim 1 or 2, wherein the at least one heat exchange channel (400) comprises two heat exchange sub-channels (400a, 400b) formed in two volume sections (410a, 410b) of the clamping plate which are vertically above each other in a direction perpendicular to the main face of the clamping plate, advantageously the two volume sections (410a, 410b) have essentially the same shape.

4. The device according to claim 3, wherein a passage hole (420) is formed between the two volume sections (410a, 410b) communicating the two heat exchange sub-channels (400a, 400b).

5. The device according to claim 4, in which the two sub-channels are arranged such that a gas circulating in the circulation conduit, from the gas inlet (EG) to the gas outlet (SG), flows successively in one of the two sub-channels, in the passage hole and in the other of the two sub-channels.

6. The device according to one of claims 1 to 5, wherein the at least one gas circulation conduit (350) comprises a first gas inlet conduit (350EC, 350EA) and a first gas outlet conduit (350SE, 350SA) intended, respectively, to supply gas and to discharge gases of a type, called first type, of electrode selected from the anodes and the cathodes.

7. The device according to claim 6, wherein the at least one gas circulation conduit (350) also comprises a second gas inlet conduit (350EC, 350EA) and a second gas outlet conduit (350SE, 350SA) intended, respectively, to supply gas and to discharge gases from another type, called second type, of electrode, different from the first type, selected from the anodes and the cathodes.

8. The device according to claim 6 or 7, wherein the heat exchange channel (400EA, 400EC) of the first gas inlet conduit, called first inlet channel (400EA, 400EC), and the heat exchange channel of the first gas outlet duct, called first outlet channel (400SA, 400SC), are formed in the same clamping plate, advantageously vertically above each other in a direction which is perpendicular to the main face of said clamping plate.

9. The device according to claim 7 and 8, wherein the heat exchange channel (400EA, 400EC) of the second gas inlet conduit, called second inlet channel (400EA, 400EC), and the heat exchange channel of the second gas outlet conduit, called second outlet channel (400SA, 400SC), are formed in the same clamping plate, advantageously vertically above each other in a direction which is perpendicular to the main face of said clamping plate.

10. The device according to claim 7, wherein the heat exchange channel (400EA, 400EC) of the first gas inlet conduit, called first inlet channel (400EA, 400EC), and the heat exchange channel of the second gas outlet conduit, called second outlet channel (400SA, 400SC), are formed in the same clamping plate, advantageously vertically above each other in a direction perpendicular to the main face of said clamping plate, and/orthe heat exchange channel (400EA, 400EC) of the second gas inlet conduit, called second inlet channel (400EA, 400EC), and the heat exchange channel of the first gas outlet conduit, called first outlet channel (400SA, 400SC), are formed in the same clamping plate, advantageously vertically above each other in a direction which is perpendicular to the main face of said clamping plate.

11. The device according to one of claims 1 to 10, wherein the at least one channel has a hexagonal-shaped cross-section.

12. The device according to one of claims 1 to 11, wherein the clamping plates (300, 310) are made of refractory austenitic steel, in particular of the AISI 310 type.

13. The device according to one of claims 1 to 12, wherein the clamping plates (300, 310) each have a thickness comprised between 20 and 30 mm, in particular in the range of 25 mm.

14. The device according to one of claims 1 to 13, wherein two end plates (240a, 240b) are interposed between each of the clamping plates (300, 310) and the solid oxide stack (200).

15. The device according to one of claims 1 to 14, wherein at least one of the two end plates (240a, 240b) is electrically insulated from the clamping plate, by interposing a heat insulating plate between said clamping plate and said end plate.
